# EUROPÄISCHE PATENTSCHRIFT

(11) **EP 3 741 917 B1**
(45) Veröffentlichungstag und Bekanntmachung des Hinweises auf die Patenterteilung: **20.09.2023**
(21) Anmeldenummer: 20175678.0
(22) Anmeldetag: 20.05.2020
(51) Int. Cl.: E02F 9/20, E02F 9/26, G07C 3/00, B60P 1/04, G06Q 50/08, G07C 5/00, G08G 1/00, H04W 4/02, H04W 4/44

(54) **SYSTEM ZUR ERMITTLUNG DER AKTIVITÄTEN WENIGSTENS EINER AUF BAUSTELLEN UND/ODER IM BERGBAU EINSETZBAREN MASCHINE BAUMASCHINE**
SYSTEM FOR DETERMINING THE ACTIVITIES OF AT LEAST ONE CONSTRUCTION MACHINE TO BE USED IN CIVIL WORKS OR IN MINING OPERATIONS
SYSTÈME DE DÉTERMINATION DES ACTIVITÉS D'AU MOINS UNE MACHINE DE CONSTRUCTION UTILISABLE DANS LES SITES DE CONSTRUCTION OU DANS LE DOMAINE D'EXPLOITATION MINIÈRES

(30) Priorität: 24.05.2019 DE 102019003695
(43) Veröffentlichungstag der Anmeldung: 25.11.2020
(73) Patentinhaber: abaut GmbH, 80992 München (DE)
(72) Erfinder: Kaluza, Sebastian, 82256 Fürstenfeldbruck (DE); Häupl, Markus, 9520 Sattendorf (AT); Falkner, Max-David, 80639 München (DE); Wimmer, Dr. Matthias, 80992 München (DE); Kirev, Georgi, 81677 München (DE)
(74) Vertreter: Mötsch, Andreas

(56) Entgegenhaltungen:
- WO-A1-2017/079581
- US-A1- 2014 324 291
- US-A1- 2017 022 686
- US-A1- 2017 328 031
- US-A1- 2018 066 415

## Beschreibung

Die vorliegende Erfindung betrifft ein System zur Ermittlung der Aktivitäten wenigstens einer Maschine. Das System kann zur Überwachung von mehreren Maschinen genutzt werden. Die wenigstens eine Maschine kann ihre Position verändern und/oder mit wenigstens einem Abschnitt Bewegungen ausführen. Derartige Maschinen können beispielsweise Fahrzeuge und/oder Baumaschinen sein.

WO 2017/079581 A1 offenbart ein Steuerungssystem für eine mobile Maschine. Das Steuerungssystem weist einen ersten Sensor auf, der ein erstes Signal erzeugt, das die Geschwindigkeit der mobilen Maschine oder den Abstand zwischen der mobilen Maschine und einem Behälter angibt. Das Steuerungssystem umfasst ferner ein Anzeigesystem mit einer Anzeigevorrichtung, die einer Bedienperson des Behälters Informationen anzeigt, die sich auf die mobile Maschine und/oder den Behälter beziehen.

Beispielsweise bei Baustellen oder im Tagebau werden Maschinen wie Bagger, Radlader, LKWs und Kipper bzw. Dumper eingesetzt, die an verschiedenen Stellen der Baustelle verschiedene Aktivitäten ausführen. Ein Kippfahrzeug kann beispielsweise an einer Stelle der Baustelle von einem Bagger beladen werden und an einer anderen Stelle der Baustelle das transportierte Erdreich oder Gestein abkippen. Um die Betriebsabläufe der einzelnen auf einer Baustelle tätigen Maschinen zu überwachen, werden häufig Systeme eingesetzt, die der Fahrer oder der Bediener der Maschine manuell bedienen muss. Bei diesen Systemen muss der Fahrer oder der Bediener manuell eingeben, wenn seine Maschine eine bestimmte Aktivität auf der Baustelle ausführt, d.h. der Fahrer oder Bediener muss den Beginn der Aktivität und das Ende der Aktivität manuell in das System eingeben. Bei einem Kippfahrzeug muss der Fahrer des Kippers manuell in das System eingegeben, wenn seine Maschine an einer Stelle der Baustelle beladen wird oder das transportierte Erdreich oder Gestein an einer anderen Stelle der Baustelle abkippt. Bei einem Bagger muss der Bediener beispielsweise manuell eingeben, wenn mit dem Bagger ein Lkw oder ein Kipper beladen wird.

Es ist eine Aufgabe der vorliegenden Erfindung, ein System zur Ermittlung der Aktivitäten wenigstens einer auf Baustellen und/oder im Bergbau einsetzbaren Maschine bereitzustellen, mit dem der Arbeitsablauf wenigstens einer Maschine ohne Eingriff eines Fahrers oder Bedieners lückenlos überwacht werden kann.

Diese Aufgabe wird durch ein System zur Ermittlung der Aktivitäten wenigstens einer Maschine mit den Merkmalen des Anspruchs 1 gelöst.

Weitere Ausführungsformen sind in den abhängigen Ansprüchen angegeben.

Das erfindungsgemäße System zur Ermittlung der Aktivitäten wenigstens einer auf Baustellen und/oder im Bergbau einsetzbaren Maschine, die ihre Position verändern und/oder mit wenigstens einem Abschnitt Bewegungen ausführen kann, umfasst wenigstens eine an der wenigstens einen Maschine anordenbare Sensoreinheit und wenigstens eine Auswerteeinheit. Die wenigstens eine Sensoreinheit ist dazu ausgebildet, Informationen bezüglich der wenigstens einen Maschine zu ermitteln, wobei die von der wenigstens einen Sensoreinheit ermittelten Informationen zumindest eine Information aus der folgenden Gruppe umfassen: Positionsinformationen der Maschine, wenigstens einen Geschwindigkeitswert und/oder wenigstens einen Beschleunigungswert in wenigstens einer Richtung. Die wenigstens eine Auswerteeinheit ist dazu ausgebildet, anhand der von der wenigstens einen Sensoreinheit ermittelten Informationen wenigstens eine Aktivität der wenigstens einen Maschine zu ermitteln.

Die wenigstens eine Auswerteeinheit ist dazu ausgebildet, anhand der von der wenigstens einen Sensoreinheit ermittelten Informationen Informationsmuster zu ermitteln, wobei die wenigstens eine Auswerteeinheit dazu ausgebildet ist, anhand der ermittelten Informationsmuster eine Aktivität wenigstens einer Maschine zu ermitteln.

Mit dem erfindungsgemäßen System kann wenigstens eine Maschine lückenlos überwacht werden. Zur Ermittlung der Aktivitäten wenigstens einer Maschine werden die von der wenigstens einen Sensoreinheit ermittelten Informationen verwendet, die der wenigstens einen Auswerteeinheit zur Verfügung gestellt werden. Die wenigstens eine Auswerteeinheit ist dazu ausgebildet, anhand der von der wenigstens einen Sensoreinheit ermittelten Informationen eine Aktivität der Maschine und auch die Art der Aktivität zu ermitteln. Eine Maschine kann verschiedene Arten von Aktivitäten ausführen. Ein Kippfahrzeug kann, um bei dem eingangs beschriebenen Beispiel zu bleiben, beispielsweise die Aktivitätsarten "Beladen", "Fahren (Transportfahrt)" und "Entladen" ausführen oder an diesen Aktivitätsarten beteiligt sein. Ein Bagger kann beispielsweise die Aktivitätsarten "Vorbereiten des Materials mit der Schaufel" und "Schaufeln des Materials zum Beladen eines Fahrzeugs" ausführen. Mit dem System kann eine engmaschige bzw. lückenlose und zeitlich synchronisierte Überwachung wenigstens einer Maschine erreicht werden, die anhand der von der wenigstens einen Sensoreinheit ermittelten Position und/oder dem von der wenigstens einen Sensoreinheit ermittelten wenigstens einen Beschleunigungswert und/oder dem von der wenigstens einen Sensoreinheit ermittelten wenigstens einen Geschwindigkeitswert erfolgt.

Mit dem erfindungsgemäßen System kann auch ermittelt werden, wie oft eine Maschine eine bestimmte Aktivität ausführt. Dadurch kann ermittelt werden, wie oft die Schaufel eines Baggers bewegt wird, um einen Lkw zu beladen oder um das Erdreich abzutragen. Anhand dieser Informationen kann die von dem Bagger abgetragene und damit auch die von dem Lkw transportierte Materialmenge bzw. das Gewicht des abgetragenen Materials ermittelt werden. Die Transportwege und die Beladeorte bzw. Entladeorte können mit dem System ermittelt werden.

Mit dem erfindungsgemäßen System können somit die Betriebsabläufe verschiedener Maschinen zuverlässig überwacht und dabei die Transportwege, der Beladeort, der Entladeort und die transportierte Materialmenge bzw. das Gewicht der Ladung ermittelt werden.

Die wenigstens eine Sensoreinheit kann kabellos mit der wenigstens einen Auswerteinheit kommunizieren. Die wenigstens eine Sensoreinheit kann beispielsweise über Funknetze und/oder Mobilfunknetze mit der wenigstens einen Auswerteinheit kommunizieren. Die wenigstens eine Sensoreinheit kann jedoch auch über andere kabellose Kommunikationsprotokolle bzw. Kommunikationsverfahren mit der wenigstens einen Auswerteinheit kommunizieren. Die Positionsinformationen der wenigstens einen Maschine können die Geo-Position der Maschine sein. Die Positionsinformationen können mit einem GNSS-Empfänger ermittelt werden. Die wenigstens eine Sensoreinheit kann ferner zur Ermittlung der Positionsinformationen mit Funkzellen kommunizieren.

Der wenigstens eine Beschleunigungswert in wenigstens eine Richtung kann bei einer Bewegung der Maschine oder bei einer Bewegung wenigstens eines Abschnitts der Maschine ermittelt werden. Bei einem Bagger kann der wenigstens eine Beschleunigungswert beispielsweise bei einer Betätigung der Schaufel des Baggers ermittelt werden. Die wenigstens eine Sensoreinheit kann dazu ausgebildet sein, Beschleunigungswerte in zumindest drei Richtungen, d.h. in x-, y-, z-Richtung zu ermitteln. Die von der wenigstens einen Sensoreinheit ermittelbaren Informationen können zumindest wenigstens einen Geschwindigkeitswert umfassen.

Die von der wenigstens einen Sensoreinheit ermittelbaren Informationen können die Orientierung und/oder Lage der Maschine oder die Orientierung und/oder Lage zumindest eines Abschnitts der Maschine umfassen. Bei einem Hydraulikbagger stellt beispielsweise der um 360° drehbare Aufbau einen Abschnitt der Maschine dar, der seine Orientierung und/oder Lage unabhängig von den Rädern oder Ketten ändern kann.

Ferner können die von der wenigstens einen Sensoreinheit ermittelbaren Informationen Umgebungsinformationen der Maschine umfassen. Diese Umgebungsinformationen können beispielsweise der Luftdruck und die Temperatur sein. Zur Ermittlung von Umgebungsinformationen kann die wenigstens eine Sensoreinheit ferner wenigstens eine Kamera umfassen oder mit wenigstens einer Kamera verbunden sein. Die Verbindung mit der wenigstens einen Kamera kann kabellos hergestellt werden, um Daten senden zu können. Die wenigstens eine Kamera kann die Umgebung oder Teile der Umgebung der Maschine erfassen.

Die Auswerteeinheit und/oder die Sensoreinheit kann dazu ausgebildet sein, zumindest einige der von der wenigstens einen Sensoreinheit ermittelten Informationen zusammenzuführen. Die wenigstens eine Auswerteeinheit kann somit verschiedene von der wenigstens einen Sensoreinheit ermittelten Informationen zusammenführen, um bestimmte Informationen zu verifizieren und/oder zu gewichten. Dadurch kann ein Informationsmodell bezüglich der wenigstens einen Maschine erstellt werden. Aus diesem Informationsmodell kann die Auswerteeinheit die Aktivitäten der Maschine ermitteln.

Die wenigstens eine Auswerteinheit kann dazu ausgebildet sein, anhand der von der wenigstens einen Sensoreinheit ermittelten Informationen für einen Maschinentyp spezifische Aktivitäten zu ermitteln. Die Auswerteinheit kann somit anhand der von der wenigstens einen Sensoreinheit ermittelten Informationen ermitteln, wenn ein Bagger die Schaufel betätigt, ein Lkw oder Kippfahrzeug beladen wird oder wenn ein Kippfahrzeug oder Lkw mit seiner Ladefläche einen Kippvorgang ausführt oder entladen wird. Darüber hinaus kann die wenigstens eine Auswerteinheit ermitteln, wenn ein Lkw oder ein Kipper von einem Bagger beladen wird. Die Auswerteinheit kann somit eine Aktivität für den Lkw und eine Aktivität für den Bagger ermitteln.

Die wenigstens eine Auswerteeinheit ist dazu ausgebildet, in den von der wenigstens einen Sensoreinheit ermittelten Informationen Informationsmuster zu ermitteln. Die wenigstens eine Auswerteeinheit ist dazu ausgebildet, anhand der ermittelten Informationsmuster eine Aktivität und die Art dieser Aktivität zu ermitteln. Eine Maschine kann bei einer bestimmten Aktivitätsart ein bestimmtes Verhalten aufweisen. Dieses Verhalten kann sich in den von der wenigstens einen Sensoreinheit ermittelten Informationen widerspiegeln. Die wenigstens eine Auswerteeinheit kann die von der wenigstens einen Sensoreinheit ermittelten Informationen auf bestimmte Informationsmuster hin analysieren. Die wenigstens eine Auswerteeinheit kann ferner dazu ausgebildet sein, die Informationsmuster bestimmten Aktivitäten oder Aktivitätsarten der Maschine zuzuordnen. Beispielsweise das Beladen und das Entladen eines Kippfahrzeug oder LKWs kann ein bestimmtes Informationsmuster liefern, das von der wenigstens einen Auswerteeinheit ermittelt werden kann. Gleiches gilt für einen Bagger. Die Betätigung der Schaufel des Baggers zum Aufnehmen von Erdreich oder Gestein kann ein bestimmtes Informationsmuster liefern. Ebenso kann die Bewegung der Schaufel zum Vorbereiten bzw. Lockern des Materials ein vorbestimmtes Informationsmuster aufweisen, das von der wenigstens einen Auswerteinheit ermittelt und dieser Tätigkeit zugeordnet werden kann.

Die wenigstens eine Auswerteeinheit kann dazu ausgebildet sein, eine Aktivität einer Maschine oder kooperative Aktivitäten von zwei oder mehreren Maschinen anhand der von den mehreren Sensoreinheiten ermittelten Informationen zu ermitteln. Die wenigstens eine Auswerteeinheit kann somit auch Informationsmuster erfassen, wenn zwei Maschinen zusammenarbeiten bzw. interagieren. Interagierende oder kooperierende Maschinen können bei bestimmten Aktivitäten und auch Aktivitätsarten Informationsmuster erzeugen, die von der wenigstens eine Auswerteeinheit ermittelt werden können. Anhand dieser Informationsmuster kann die wenigstens eine Auswerteeinheit ermitteln, dass zwei Maschinen interagierende Aktivitäten ausführen. Es kann beispielsweise von der wenigstens einen Auswerteeinheit ermittelt werden, wenn ein Kippfahrzeug von einem Bagger beladen wird, d. h. dass Kippfahrzeug und der Bagger interagieren.

Die wenigstens eine Auswerteinheit kann eine Einheit mit künstlicher Intelligenz sein. Die Einheit mit künstlicher Intelligenz (KI) kann KI-Methoden in Form von maschinellem Lernen (Machine-Learning) oder neuronalen Netzen ausführen. Diese KI-Methoden werden basierend auf einer Datenbasis, d.h. basierend auf Trainingsdaten, trainiert, die Eingangsinformationen und das vorgegebene Ergebnis umfassen. Die Eingangsinformationen umfassen zumindest die Positionsinformationen der Maschine und/oder wenigstens einen von der wenigstens einen Sensoreinheit ermittelten Beschleunigungswert und/oder wenigstens einen von der wenigstens einen Sensoreinheit ermittelten Geschwindigkeitswert. Die Eingangsinformationen können jedoch zusätzlich oder alternativ auch die übrigen der voranstehend genannten Informationen umfassen, die von der wenigstens einen Sensoreinheit ermittelt werden. Das vorgegebene Ergebnis kann die Aktivität und die Aktivitätsart der wenigstens einen Maschine sein. Während des Trainings können die KI-Methoden Informationsmuster in den Trainingsdaten ermitteln und assoziieren diese mit dem vorgegebenen Ergebnis, d.h. mit der Aktivität der Maschine. Im praktischen Einsatz werden diese Informationsmuster dann in den von der wenigstens einen Sensoreinheit ermittelten Informationen, d. h. in den Eingangsinformationen, erkannt und die trainierte Aktivität der Maschine als Ergebnis bzw. als Kombination aus trainierten Ergebnissen ausgegeben. Neuronale Netze können abstrahierende oder verallgemeinernde Eigenschaften haben, d.h. sie können auch bis zu einem gewissen Grad für unbekannte Situationen ein plausibles Ergebnis ausgeben. Anders ausgedrückt können die KI-Methoden anhand der Eingangsinformationen die Merkmale und/oder die Struktur der Aktivitäten und die Arten der Aktivitäten einer Maschine ermitteln und diese dann im praktischen Einsatz erkennen.

Das System kann dazu ausgebildet sein, unabhängig von internen Maschinenparametern der wenigstens einen Maschine eine Aktivität und die Art der Aktivität der wenigstens eine Maschine zu ermitteln. Mit anderen Worten kann das System ohne interne Maschinenparameter, wie zum Beispiel Motorkennwerte oder Hydraulikdruckwerte, eine Aktivität und auch die Art der Aktivität der wenigstens einen Maschine ermitteln. Das System kann eine Aktivität und auch die Art der Aktivität der wenigstens einen Maschine ohne Zugriff auf die internen Maschinenparameter oder internen Maschinendaten ermitteln, die von einem CAN-Bus oder einer ähnlichen Einrichtung der Maschine übertragen werden. Das System kann dadurch mit verschiedensten Maschinen und auch mit Maschinen verschiedener Hersteller verwendet werden, da das System unabhängig von den internen Maschinenparametern und dem jeweiligen Hersteller der Maschine die Aktivität und die Art der Aktivität der Maschine ermitteln kann. Eine Verbindung der wenigstens einen an der Maschine anbringbaren Sensoreinheit mit der Steuerung der Maschine ist für die Funktion des Systems nicht notwendig.

Das System kann mehrere Sensoreinheiten aufweisen. Jede der Sensoreinheiten kann an einer Maschine angeordnet sein. Die Sensoreinheiten können an Maschinen unterschiedlichen Typs angeordnet sein. Beispielsweise kann eine Sensoreinheit an einem Bagger, eine Sensoreinheit an einem Lkw und eine weitere Sensoreinheit an einem Kipper angeordnet sein. Das System kann dazu ausgebildet sein, Aktivitäten und Arten von Aktivitäten verschiedenster Maschinen zu ermitteln. Die Auswerteeinheit kann anhand der von den Sensoreinheiten ermittelten Informationen Aktivitäten von wenigstens zwei interagierenden Maschinen ermitteln.

Die wenigstens eine Sensoreinheit kann dazu ausgebildet sein, die Informationen bezüglich der wenigstens einen Maschine kontinuierlich oder intermittierend zu ermitteln. Die wenigstens eine Sensoreinheit kann dazu ausgebildet sein, die ermittelten Informationen in Form von bestimmten zeitlichen Abständen an die Auswerteinheit zu senden. Die ermittelten Informationen können beispielsweise in Echtzeit oder nahezu in Echtzeit gesendet oder zum Abruf bereitgestellt werden. Die wenigstens eine Sensoreinheit kann auch zum Speichern der ermittelten Informationen ausgebildet sein. Falls die wenigstens eine Sensoreinheit keine Verbindung zu der wenigstens einen Auswerteinheit herstellen kann, kann die wenigstens eine Sensoreinheit die Informationen zu einem späteren Zeitpunkt senden, an dem eine Verbindung mit der wenigstens einen Auswerteinheit hergestellt werden kann.

Die wenigstens eine Auswerteeinheit kann in die wenigstens eine Sensoreinheit integriert sein. Die von der wenigstens einen Sensoreinheit erfassten Informationen können somit von der in die wenigstens eine Sensoreinheit integrierten Auswerteeinheit zumindest teilweise analysiert werden. Die von der Auswerteeinheit analysierten Informationen können von der wenigstens einen Sensoreinheit ausgegeben werden. Neben den von der Auswerteeinheit analysierten Informationen können auch weitere von der Sensoreinheit ermittelte Informationen von der Sensoreinheit ausgegeben werden. Eine in die Sensoreinheit integrierte Auswerteeinheit kann die ermittelten Informationen voranalysieren und nur das Analyseergebnis übermitteln, wodurch große Informationspakte nicht oder nur zum Teil übermittelt werden müssen.

Die wenigstens eine Auswerteeinheit kann eine räumlich von der wenigstens einen Sensoreinheit getrennte Einheit sein. Die wenigstens eine Sensoreinheit und die wenigstens eine Auswerteeinheit können dazu ausgebildet sind, kabellos miteinander zu kommunizieren. Die wenigstens eine Auswerteeinheit kann beispielsweise ein Server sein, der sich an einem anderen Ort als die wenigstens eine Sensoreinheit befindet. Die Sensoreinheit kann die von ihr ermittelten Informationen an die wenigstens eine Auswerteeinheit übermitteln oder für die wenigstens eine Auswerteeinheit zum Abruf bereitstellen.

Das System kann wenigstens eine erste Auswerteinheit und wenigstens eine zweite Auswerteinheit aufweisen. Die wenigstens eine erste Auswerteeinheit kann eine räumlich von der wenigstens einen Sensoreinheit getrennte Einheit sein. Die wenigstens eine erste Auswerteeinheit kann eine zentrale Auswerteeinheit sein. Die wenigstens eine zweite Auswerteinheit kann in die wenigstens eine Sensoreinheit integriert sein. Die wenigstens eine zweite Auswerteeinheit kann wie bereits erwähnt die von der wenigstens einen Sensoreinheit ermittelten Informationen zumindest teilweise analysieren. Die von der wenigstens einen zweiten Auswerteeinheit analysierten Informationen können an die wenigstens eine erste Auswerteeinheit übermittelt oder zum Abruf durch die wenigstens eine erste Auswerteeinheit bereitgestellt werden. Die wenigstens eine erste Auswerteeinheit kann die Informationen der wenigstens einen Sensoreinheit und/oder die von der wenigstens einen zweiten Auswerteeinheit analysierten Informationen einer weiteren Analyse unterziehen, um eine Aktivität wenigstens einer Maschine zu ermitteln. Die wenigstens eine zweite Auswerteeinheit kann beispielsweise die von wenigstens einer Kamera erfassten Informationen analysieren, und das Ergebnis dieser Analyse an die wenigstens eine erste Auswerteeinheit übermitteln oder der wenigstens einen ersten Auswerteeinheit zum Abruf bereitstellen.

Die Aufgabe der Erfindung wird ferner mit einem Verfahren gemäß dem Anspruch 11 gelöst, bei dem wenigstens eine Sensoreinheit Informationen bezüglich der wenigstens einen Maschine ermittelt, wobei die von der wenigstens einen Sensoreinheit ermittelten Informationen zumindest eine Information aus der folgenden Gruppe umfassen: Positionsinformationen der Maschine, wenigstens einen Geschwindigkeitswert und/oder wenigstens einen Beschleunigungswert in wenigstens einer Richtung, wobei die wenigstens eine Auswerteeinheit anhand der von der wenigstens einen Sensoreinheit ermittelten Informationen wenigstens eine Aktivität der wenigstens einen Maschine ermittelt.
1

Die Sensoreinheit kann an verschiedenen Maschinen angeordnet werden. Die Sensoreinheit kann mit Maschinen verschiedener Hersteller verwendet werden, da die Sensoreinheit keinen Zugriff auf die internen Maschinenparameter oder die internen Maschinendaten benötigt. Die Sensoreinheit muss somit nicht ab Werk in die Maschine eingebaut werden, sondern kann problemlos nachgerüstet werden. Die Sensoreinheit kann unabhängig von den internen Maschinenparametern und dem jeweiligen Hersteller der Maschine zur Ermittlung der Aktivität und der Art der Aktivität der Maschine zumindest beitragen oder die Aktivität und die Art der Aktivität selbst ermitteln. Darüber hinaus ist die wenigstens eine Sensoreinheit sehr schnell zu installieren, da sie lediglich in oder an der Maschine angeordnet werden muss.

Die wenigstens eine Sensoreinheit kann wenigstens eine Kommunikationseinheit aufweisen, die zur kabellosen Kommunikation ausgebildet ist.

Die wenigstens eine Sensoreinheit kann wenigstens eine Auswerteeinheit aufweisen. Die wenigstens eine Auswerteeinheit kann die von der wenigstens einen Sensoreinheit ermittelten Informationen analysieren. Die wenigstens eine Auswerteeinheit kann dazu ausgebildet sein, in den von der wenigstens einen Sensoreinheit ermittelten Informationen Informationsmuster zu ermitteln. Die wenigstens eine Auswerteeinheit kann dazu ausgebildet sein, anhand der ermittelten Informationsmuster eine Aktivität und die Art dieser Aktivität zu ermitteln. Eine Maschine kann bei einer bestimmten Aktivitätsart ein bestimmtes Verhalten aufweisen. Die wenigstens eine Auswerteeinheit kann die von der wenigstens einen Sensoreinheit ermittelten Informationen auf bestimmte Informationsmuster hin analysieren. Die wenigstens eine Auswerteeinheit kann ferner dazu ausgebildet sein, die Informationsmuster bestimmten Aktivitäten oder Aktivitätsarten der Maschine zuzuordnen. Die wenigstens eine Auswerteeinheit kann eine Einheit mit künstlicher Intelligenz aufweisen.

Die Sensoreinheit kann wenigstens eine Steuerung aufweisen, die zur Steuerung der wenigstens einen Einrichtung zur Erfassung der Positionsinformationen, des wenigstens einen Sensors und/oder der wenigstens einen Kommunikationseinheit ausgebildet ist.

Die wenigstens eine Sensoreinheit kann wenigstens einen der nachfolgend aufgeführten Sensoren umfassen: Gyroskop, Beschleunigungssensor, Magnetometer, Barometer, Feuchtigkeitssensor, Temperatursensor, Mikrofon, Umgebungslichtsensoren, Annäherungssensor, Ultraschallsensoren, Time-of-Flight-Sensoren, Ultra-Wide-Band-Sensoren. Mit diesen Sensoren können Informationen bezüglich der wenigstens einen Maschine von der wenigstens einen Sensoreinheit ermittelt werden. Die wenigstens eine Sensoreinheit kann dazu ausgebildet sein, beim Starten der Maschine, an der sie angeordnet ist, "aufzuwachen" und beim Ausschalten der Maschine in den Ruhezustand überzugehen. Das "Aufwachen" und das Überführen in den Ruhezustand der Sensoreinheit kann beispielsweise durch den Beschleunigungssensor und/oder das Gyroskop initiiert werden. Auf diese Weise ist die Sensoreinheit nur aktiv, wenn sich die Maschine in Betrieb befindet. Dadurch kann Energie eingespart werden.

Die Einrichtung zur Positionserfassung der Sensoreinheit kann wenigstens einen GNSS-Empfänger und/oder eine Einheit zur Kommunikation mit wenigstens einer (Mobil-)Funkzelle aufweisen. Ferner kann die Sensoreinheit wenigstens eine Kamera umfassen oder mit wenigstens einer Kamera verbindbar sein. Die wenigstens eine Kamera kann zum Erfassen von Umgebungsinformationen der wenigstens einen Maschine dienen.

Die Sensoreinheit kann eine Energiespeichereinheit wie z.B. einen Akku oder eine Batterie aufweisen oder mit einem Stromkreis der Maschine, an der sie angeordnet ist, verbindbar sein. Die wenigstens eine Sensoreinheit kann beispielsweise mit dem Zigarettenanzünder oder einem USB-Anschluss der Maschine verbindbar sein. Dadurch ist die wenigstens eine Sensoreinheit sehr schnell in oder an der Maschine zu installieren. Alternativ kann die wenigstens eine Sensoreinheit eine Energiegewinnungseinheit aufweisen oder mit einer Energiegewinnungseinheit koppelbar sein. Eine Energiegewinnungseinheit können in diesem Zusammenhang beispielsweise Solarzellen oder ähnliche Einrichtungen sein.

Die wenigstens eine Sensoreinheit kann mit einer Kapselung ausgebildet sein. Die Sensoreinheit kann mit der Kapselung wasserdicht und/oder staubdicht ausgebildet sein. Die wenigstens eine Sensoreinheit kann an der Maschine angebracht werden. Die wenigstens eine Sensoreinheit kann über wenigstens eine Halterung oder eine ähnliche Einrichtung an der Maschine angebracht werden.

Im Folgenden werden zwei Ausführungsbeispiele der Erfindung mit Bezug auf die beigefügten Figuren beschrieben. Es stellen dar:
- Fig. 1: eine schematische Ansicht eines Systems zur Ermittlung der Aktivitäten wenigstens einer Maschine gemäß einem ersten Ausführungsbeispiel;
- Fig. 2: eine schematische Ansicht einer Sensoreinheit 1;
- Fig. 3: eine schematische Ansicht eines Systems zur Ermittlung der Aktivitäten wenigstens einer Maschine gemäß einem zweiten Ausführungsbeispiel; und
- Fig. 4: eine weitere schematische Ansicht einer Sensoreinheit.

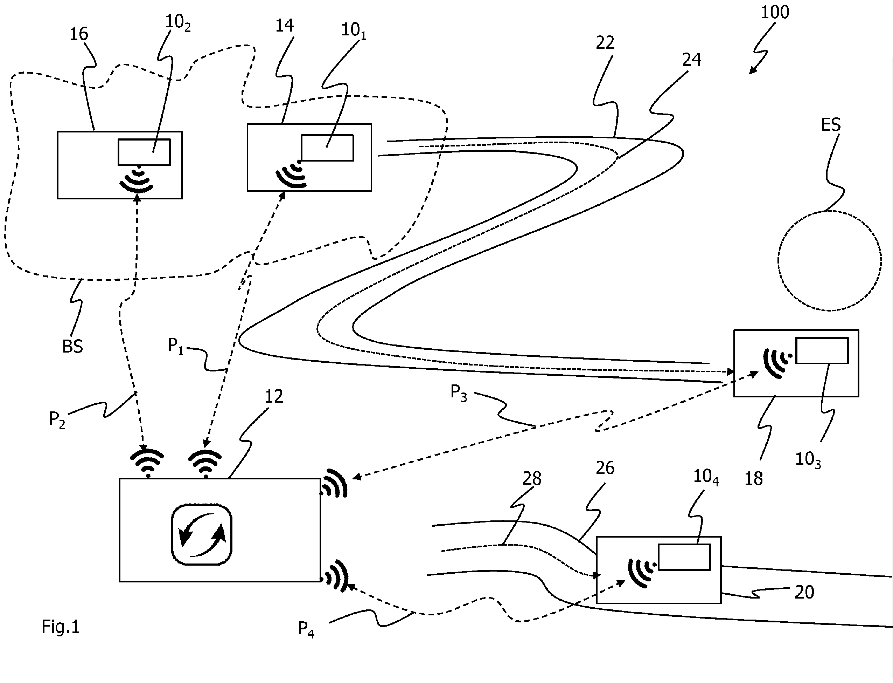

Figur 1 zeigt eine schematische Ansicht eines Systems 100 zur Ermittlung der Aktivitäten wenigstens einer Maschine gemäß einem ersten Ausführungsbeispiel. Das System 100 gemäß diesem Ausführungsbeispiel weist vier Sensoreinheiten 10₁, 10₂, 10₃, 10₄ und eine Auswerteeinheit 12 auf. Die Sensoreinheiten 10₁, 10₂, 10₃, 10₄ können kabellos mit der Auswerteeinheit 12 kommunizieren. Die kabellose Kommunikation zwischen den Sensoreinheiten 10₁, 10₂, 10₃, 10₄ und der Auswerteeinheit 12 ist in Figur 1 durch die Pfeile P₁, P₂, P₃ und P₄ dargestellt. Beispielsweise kann die Kommunikation zwischen den Sensoreinheiten 10₁, 10₂, 10₃, 10₄ und der Auswerteeinheit 12 über Funknetze und insbesondere Mobilfunknetze erfolgen. Es sind jedoch auch andere Kommunikationsprotokolle bzw. Kommunikationsverfahren denkbar, die eine kabellose Kommunikation ermöglichen. Ferner können die Sensoreinheiten 10₁, 10₂, 10₃, 10₄ auch untereinander kabellos kommunizieren. Die Sensoreinheiten 10₁, 10₂, 10₃, 10₄ können identisch aufgebaut sein.

Die Auswerteeinheit 12 kann beispielsweise ein Server sein. Die Auswerteeinheit 12 kann im näheren Umfeld der Sensoreinheiten 10₁, 10₂, 10₃, 10₄ angeordnet sein. Die Auswerteeinheit 12 kann sich jedoch auch an einem anderen Ort als die Sensoreinheiten 10₁, 10₂, 10₃, 10₄ befinden. Beispielsweise kann die Auswerteeinheit 12 in einem zentralen Rechenzentrum bzw. Serverzentrum positioniert sein. Die Sensoreinheiten 10₁, 10₂, 10₃, 10₄ können die von ihnen ermittelten Informationen an die Auswerteeinheit 12 senden. Alternativ können die Sensoreinheiten 10₁, 10₂, 10₃, 10₄ die von ihnen ermittelten Informationen auch zum Abruf durch die Auswerteeinheit 12 bereitstellen. Dazu können die Sensoreinheiten 10₁, 10₂, 10₃, 10₄ die ermittelten Informationen in vorbestimmten zeitlichen Intervallen an die Auswerteeinheit 12 senden oder in vorbestimmten zeitlichen Intervallen zum Abruf durch die Auswerteeinheit 12 bereitstellen. Sollten die Sensoreinheiten 10₁, 10₂, 10₃, 10₄ keine Verbindung mit der Auswerteeinheit 12 herstellen können, können die von den Sensoreinheiten 10₁, 10₂, 10₃, 10₄ ermittelten Informationen dann wieder an die Auswerteeinheit 12 gesendet oder zum Abruf bereitgestellt werden, wenn eine Verbindung mit der Auswerteeinheit 12 hergestellt werden kann.

Figur 1 zeigt schematisch eine Baustelle oder einen Tagebau. Die Sensoreinheiten 10₁, 10₂, 10₃, 10₄ sind an Maschinen 14, 16, 18, 20 angeordnet. Die Sensoreinheiten 10₁, 10₂, 10₃, 10₄ sind unabhängig von den Steuerungen der Maschinen 14, 16, 18, 20, d. h. die Sensoreinheiten 10₁, 10₂, 10₃, 10₄ sind nicht mit den Steuerungen der Maschinen 14, 16, 18, 20 verbunden. Die Sensoreinheiten 10₁, 10₂, 10₃, 10₄ können nur an den Stromkreis der Maschinen 14, 16, 18, 20 angeschlossen sein, um mit Energie versorgt zu werden. Die Sensoreinheiten 10₁, 10₂, 10₃, 10₄ können jedoch auch eine Energiespeichereinheit aufweisen, sodass die Sensoreinheiten 10₁, 10₂, 10₃, 10₄ von den Maschinen 14, 16, 18, 20 unabhängige und damit autarke Einheiten darstellen.

Die Maschine 14 kann beispielsweise ein Kippfahrzeug sein. Die Maschine 16 kann ein Hydraulikbagger und die Maschine 18 ein weiteres Kippfahrzeug sein. Die Maschine 20 kann ein Radlader sein. Dadurch wird deutlich, dass die Sensoreinheiten 10₁, 10₂, 10₃, 10₄ an verschiedenen Maschinentypen angebracht werden und unabhängig vom Typ und Hersteller der Maschine Informationen über die Maschine 14, 16, 18, 20 ermitteln können, an der sie angebracht sind.

Das Kippfahrzeug 14 und der Hydraulikbagger 16 befinden sich an einer Beladestelle BS, an der Erdreich oder Gestein von dem Hydraulikbagger 16 abgetragen und auf die Ladefläche des Kippfahrzeugs 14 geschaufelt wird. Bevor das Erdreich oder das Gestein auf das Kippfahrzeug 14 geladen werden kann, bereitet der Hydraulikbagger 16 dieses Material vor, wobei das Material gelockert und/oder an eine bestimmte Stelle bewegt werden kann. Von dieser Stelle ausgehend kann das Material dann von dem Hydraulikbagger 16 auf das Kippfahrzeug 14 geladen werden, wenn das Kippfahrzeug 14 an der Beladestelle BS ankommt. An der Beladestelle BS kann der Hydraulikbagger 16 die Aktivitätsart "Vorbereiten des Materials" (abtragen bzw. lockern des Materials) und "Beladen einer Maschine" ausführen. Das Kippfahrzeug 14 kann an der Beladestelle BS die Aktivitätsart "Beladen durch Maschine" ausführen.

Die Baustelle oder der Tagebau hat ferner eine Entladestelle ES. Die Entladestelle ES kann beispielsweise ein Schacht oder eine Grube sein. An der Entladestelle ES kann das Material abgeladen werden. Zwischen der Beladestelle BS und der Entladestelle ES erstreckt sich ein Transportweg 22. Von der Beladestelle BS hat sich das Kippfahrzeug 18 entlang des Transportwegs 22 bewegt. Dies ist in Figur 1 durch den Bewegungspfad 24 des Kippfahrzeugs 18 dargestellt. Das Kippfahrzeug 18 befindet sich an der Entladestelle ES und kippt das Material durch Anheben seiner Ladefläche bzw. Kippbrücke ab. Das Kippfahrzeug 18 führt somit die Aktivitätsart "Entladen" aus. Der Radlader 20 bewegt sich entlang eines Transportwegs 26, wie durch den Bewegungspfad 28 dargestellt ist. Der Radlader 20 kann beispielsweise auf den Weg zu einer weiteren Beladestelle sein. Der Radlager 20 führt somit die Aktivitätsart "Fahren" aus.

Jede der Sensoreinheiten 10₁, 10₂, 10₃, 10₄ ermittelt Informationen über die Maschine 14, 16, 18, 20, an der die jeweilige Sensoreinheit 10₁, 10₂, 10₃, 10₄ angebracht ist. Die Sensoreinheiten 10₁, 10₂, 10₃, 10₄ können beispielsweise Informationen über die Position, Beschleunigung, Geschwindigkeit und die Orientierung oder Lage der Maschine oder Teile der Maschinen 14, 16, 18, 20 ermitteln. Anhand der von den Sensoreinheiten 10₁, 10₂, 10₃, 10₄ ermittelten Informationen kann die Auswerteeinheit 12 die von Maschinen 14, 16, 18, 20 ausgeführten Aktivitäten ermitteln. Die Auswerteeinheit 12 kann bestimmte Informationsmuster in den von den Sensoreinheiten 10₁, 10₂, 10₃, 10₄ ermittelten Informationen erkennen und diese Informationsmuster bestimmten Aktivitäten der jeweiligen Maschine 14, 16, 18, 20 zuordnen. Diese Informationsmuster können beispielsweise auf den Positionsinformationen basierende Bewegungsmuster einer Maschine 14, 16, 18, 20 oder bestimmte Muster in den von der Sensoreinheit ermittelten Beschleunigungswerten für eine der Maschinen 14, 16, 18, 20 sein. Für das Kippfahrzeug 14 und dem Hydraulikbagger 16 kann die Auswerteeinheit 12 somit ermitteln, dass der Hydraulikbagger 16 die Aktivitätsart "Beladen einer Maschine" und das Kippfahrzeug 14 die Aktivitätsart "Beladen durch eine Maschine" ausführt. Für das Kippfahrzeug 18 an der Entladestelle ES ermittelt die Auswerteeinheit 12 die Aktivitätsart "Entladen". Für den Radlader 20 kann die Auswerteeinheit 12 die Aktivitätsart "Fahren" ermitteln. Die Auswerteeinheit 12 kann ferner anhand der von der Sensoreinheit 10₂ bezüglich des Hydraulikbaggers 16 ermittelten Informationen ermitteln, wenn der Hydraulikbagger 16 das Material abträgt und zum Beladen eines dann nicht anwesenden Kippfahrzeugs vorbereitet, d.h. der Hydraulikbagger 16 führt die Aktivitätsart "Vorbereiten des Materials" aus.

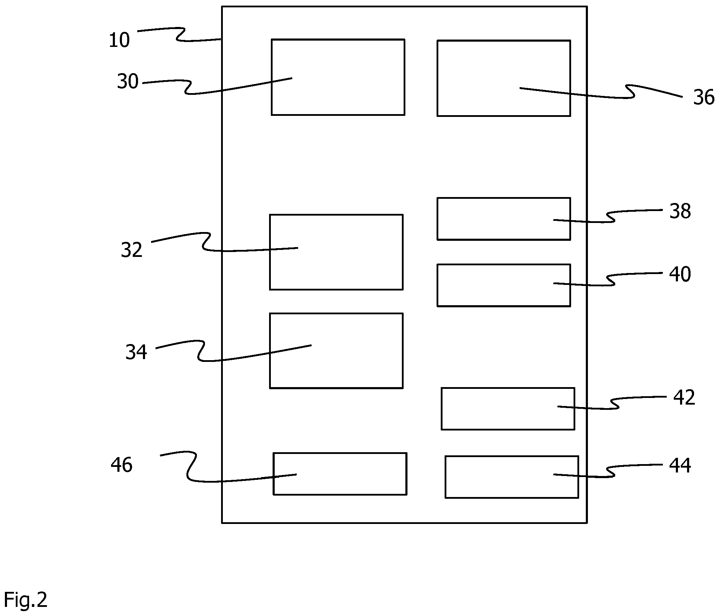

Figur 2 zeigt eine schematische Ansicht einer Sensoreinheit 10. Die Sensoreinheit 10 weist eine Einrichtung 30 zur Erfassung der Positionsinformationen, eine Kommunikationseinheit 32, einen Beschleunigungssensor 34, ein Gyroskop 36 und ein Magnetometer 38 auf. Die Einrichtung 30 zur Erfassung der Positionsinformationen kann einen GNSS-Empfänger und/oder eine Einheit zur Kommunikation mit Mobilfunkzellen umfassen, mit denen die Position der jeweiligen Maschine ermittelt werden kann. Die Sensoreinheit 10 kann auch eine Kamera 40 zum Erfassen von Umgebungsinformationen haben. Die Sensoreinheit 10 kann jedoch auch wenigstens einen weiteren Sensor 42 wie ein Barometer und/oder einen Temperatursensor aufweisen. Die Sensoreinheit 10 kann jedoch auch alle der genannten Sensoren aufweisen. Die Sensoreinheit 10 kann ferner einen Speicher 44 und eine Steuerung 46 haben, die zur Steuerung der Sensoren, des Speichers 44 und der Kommunikationseinheit 32 ausgebildet ist. In dem Speicher 44 können die von der Sensoreinheit ermittelten Informationen bezüglich der Maschine gespeichert werden, an der die Sensoreinheit angeordnet ist. Die Sensoreinheit 10 kann ferner eine Energiespeichereinheit haben, sodass die Sensoreinheit 10 eine von der jeweiligen Maschine unabhängige und damit autarke Einheit darstellt. Alternativ kann die Sensoreinheit jedoch auch zur Verbindung mit einem Stromkreis einer Maschine ausgebildet sein, sodass die Energieversorgung der Sensoreinheit 10 über die Maschine erfolgt. Die Sensoreinheit 10 kann auch eine Schnittstelle aufweisen, die zur Kommunikation mit der Steuerung einer Maschine ausgebildet sein kann.

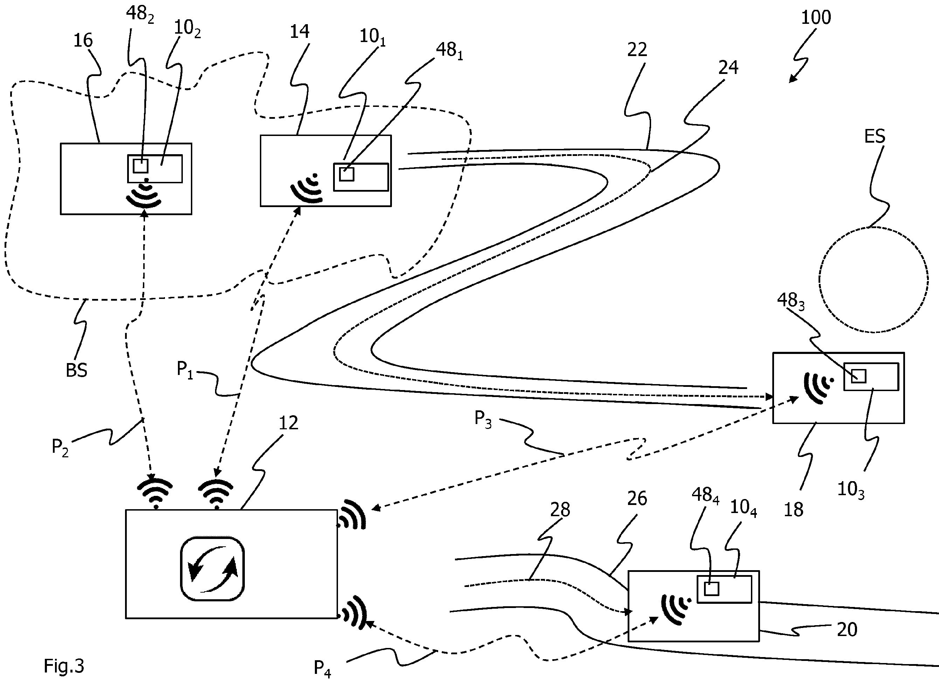

Figur 3 zeigt eine schematische Ansicht eines Systems 100 zur Überwachung wenigstens einer Maschine gemäß einem zweiten Ausführungsbeispiel. Das System 100 weist die Sensoreinheiten 10₁, 10₂, 10₃, 10₄ und die (erste) Auswerteeinheit 12 auf. Die Sensoreinheiten 10₁, 10₂, 10₃, 10₄ gemäß Figur 3 weisen zusätzlich jeweils eine (zweite) Auswerteeinheit 48₁, 48₂, 48₃, 48₄ auf. Anders ausgedrückt ist in jede der Sensoreinheiten 10₁, 10₂, 10₃, 10₄ eine Auswerteeinheit 48₁, 48₂, 48₃, 48₄ integriert. Die Auswerteeinheiten 48₁, 48₂, 48₃, 48₄ können die von der jeweiligen Sensoreinheit 10₁, 10₂, 10₃, 10₄ ermittelten Informationen zumindest teilweise analysieren. Die von den Auswerteeinheiten 48₁, 48₂, 48₃, 48₄ analysierten Informationen können an die Auswerteeinheit 12 übermittelt werden, die die zentrale Auswerteeinheit darstellt. Anders als die (zweiten) Auswerteeinheiten 48₁, 48₂, 48₃, 48₄ ist die (erste) Auswerteeinheit 12 eine räumlich von den Sensoreinheiten 10₁, 10₂, 10₃, 10₄ getrennte Einheit. Die Sensoreinheiten 10₁, 10₂, 10₃, 10₄ können die von Ihnen ermittelten Informationen und/oder die von den Auswerteeinheiten 48₁, 48₂, 48₃, 48₄ analysierten Informationen an die Auswerteeinheit 12 übermitteln oder der Auswerteeinheit 12 zum Abruf bereitstellen. Dies wird durch die die Pfeile P₁, P₂, P₃ und P₄ in Figur 3 dargestellt. Im Übrigen gelten die mit Bezug auf Figur 1 gemachten Ausführungen auch für das in Figur 3 gezeigte Ausführungsbeispiel.

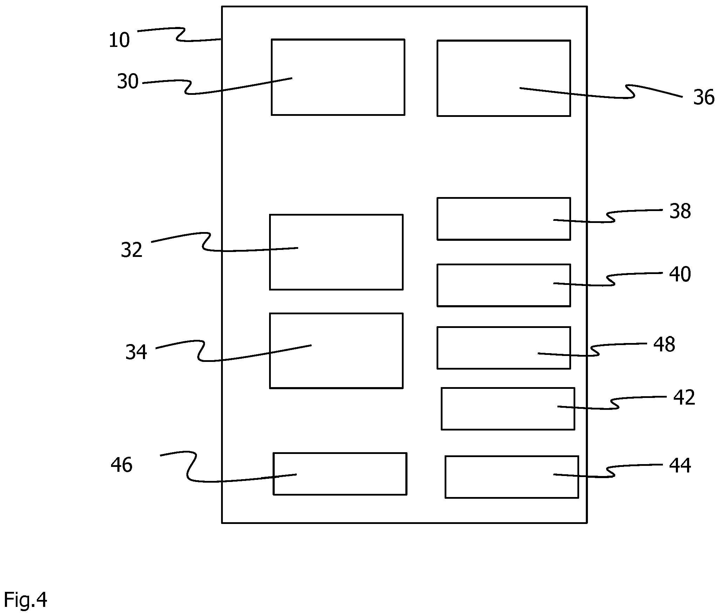

Figur 4 zeigt eine schematische Ansicht einer Sensoreinheit 10, die zusätzlich zu den in Figur 2 dargestellten Sensoren und Komponenten die Auswerteeinheit 48 aufweist.

Figur 4 zeigt somit eine Sensoreinheit 10, die in dem System gemäß Figur 3 zum Einsatz kommen kann.

Die Erfindung wurde anhand eines Ausführungsbeispiels bezüglich einer Baustelle bzw. eines Tagesbaus beschrieben. Die Erfindung ist jedoch nicht auf dieses Anwendungsgebiet beschränkt. Beispielsweise könnte die vorliegende Erfindung auch im Logistikbereich eingesetzt werden, um die Aktivitäten und Aktivitätsarten von Fahrzeugen oder LKWs (wie z.B. "Beladen", "Fahren (Transportfahrt)" und "Entladen") zu ermitteln. Die von einer Maschine ausführbaren Aktivitätsarten werden von dem Zweck und/oder dem Aufbau der Maschine definiert.

Mit der Erfindung können die Aktivitäten und Aktivitätsarten mehrerer Maschinen ermittelt werden, wodurch die Arbeitsabläufe der einzelnen Maschinen lückenlos überwacht und zusätzlich Informationen wie das Gewicht der Ladung, die Beladestelle, die Entladestelle und der Transportweg ermittelt werden können. Ein Eingreifen eines Fahrers oder eines Bedieners einer Maschine ist dabei nicht mehr notwendig, sodass der Fahrer oder Bediener sich ausschließlich auf seine eigentliche Tätigkeit konzentrieren kann.

## Patentansprüche

1. System (100) zur Ermittlung der Aktivitäten wenigstens einer auf Baustellen und/oder im Bergbau einsetzbaren Maschine (14, 16, 18, 20), die ihre Position verändern und/oder mit wenigstens einem Abschnitt Bewegungen ausführen kann, wobei die Aktivitäten Baustellenaktivitäten oder Bergbauaktivitäten umfassen, wobei das System (100) wenigstens eine an der wenigstens einen Maschine anordenbare Sensoreinheit (10) und wenigstens eine Auswerteeinheit (12, 48) umfasst,
wobei die wenigstens eine Sensoreinheit (10) dazu ausgebildet ist, Informationen bezüglich der wenigstens einen Maschine (14, 16, 18, 20) zu ermitteln,
wobei die von der wenigstens einen Sensoreinheit (10) ermittelten Informationen zumindest eine Information aus der folgenden Gruppe umfassen: Positionsinformationen der Maschine, wenigstens einen Geschwindigkeitswert in wenigstens einer Richtung, wenigstens einen Beschleunigungswert in wenigstens einer Richtung,
wobei die wenigstens eine Auswerteeinheit (12, 48) dazu ausgebildet ist, anhand der von der wenigstens einen Sensoreinheit (10) ermittelten Informationen wenigstens eine Aktivität der wenigstens einen Maschine (14, 16, 18, 20) zu ermitteln,
wobei die wenigstens eine Auswerteinheit (12, 48) dazu ausgebildet ist, in den von der wenigstens einen Sensoreinheit (10) ermittelten Informationen Informationsmuster zu ermitteln, wobei die wenigstens eine Auswerteeinheit (12) dazu ausgebildet ist, anhand der ermittelten Informationsmuster eine Aktivität wenigstens einer Maschine (14, 16, 18, 20) zu ermitteln.

2. System (100) nach Anspruch 1,
wobei die von der wenigstens einen Sensoreinheit (10) ermittelbaren Informationen zumindest Umgebungsinformationen über die Umgebung der Maschine (14, 16, 18, 20) umfassen, und/oder
wobei die von der wenigstens einen Sensoreinheit (10) ermittelbaren Informationen die Orientierung der Maschine (14, 16, 18, 20) oder die Orientierung zumindest eines Teils der Maschine (14, 16, 18, 20) umfassen.

3. System (100) nach Anspruch 1 oder 2,
wobei die wenigstens eine Auswerteinheit (12, 48) und/oder die wenigstens eine Sensoreinheit (10) dazu ausgebildet ist, die von der wenigstens einen Sensoreinheit (10) ermittelten Informationen zusammenzuführen.

4. System (100) nach einem der Ansprüche 1 bis 3,
wobei die wenigstens eine Auswerteinheit (12, 48) wenigstens eine Einheit mit künstlicher Intelligenz aufweist.

5. System (100) nach einem der Ansprüche 1 bis 4,
wobei das System (100) dazu ausgebildet ist, unabhängig von internen Maschinenparametern eine Aktivität der Maschine (14, 16, 18, 20) ermittelt.

6. System (100) nach einem der Ansprüche 1 bis 5,
wobei das System (100) mehrere Sensoreinheiten (10) aufweist, wobei jede der Sensoreinheiten (10) an jeweils einer Maschine (14, 16, 18, 20) anordenbar ist, wobei optional die wenigstens eine Auswerteeinheit dazu ausgebildet ist, eine Aktivität einer Maschine oder kooperative Aktivitäten von zwei oder mehreren Maschinen (14, 16, 18, 20) anhand der von den mehreren Sensoreinheiten ermittelten Informationen zu ermitteln.

7. System (100) nach einem der Ansprüche 1 bis 6,
wobei die wenigstens eine Sensoreinheit (10) dazu ausgebildet ist, die ermittelten Informationen an die Auswerteinheit (12, 48) zusenden oder zum Abruf durch die wenigstens eine Auswerteinheit (12, 48) bereitzustellen.

8. System (100) nach Anspruch 7,
wobei die wenigstens eine Sensoreinheit (10) dazu ausgebildet ist, die ermittelten Informationen temporär zu speichern, falls keine Verbindung zu der wenigstens einen Auswerteeinheit (12, 48) herstellbar ist, wobei die wenigstens eine Sensoreinheit (10) dazu ausgebildet ist, die gespeicherten Informationen an die wenigstens eine Auswerteinheit (12, 48) zu senden oder zum Abruf bereitzustellen, wenn eine Verbindung zu der wenigstens einen Auswerteeinheit (12, 48) herstellbar ist.

9. System (100) nach einem der Ansprüche 1 bis 8,
wobei die wenigstens eine Auswerteeinheit (48) in die wenigstens eine Sensoreinheit (10) integriert ist, oder
wobei die wenigstens eine Auswerteeinheit (12) eine räumlich von der wenigstens einen Sensoreinheit (10) getrennte Einheit ist.

10. System (100) nach einem der Ansprüche 1 bis 9,
wobei das System (100) wenigstens eine erste Auswerteinheit (12) und wenigstens eine zweite Auswerteinheit (48) aufweist, wobei optional die wenigstens eine erste Auswerteeinheit (12) eine räumlich von der wenigstens einen Sensoreinheit (10) getrennte Einheit und die wenigstens eine zweite Auswerteinheit (48) in die wenigstens eine Sensoreinheit (10) integriert ist.

11. Verfahren zur Ermittlung der Aktivitäten wenigstens einer auf Baustellen und/oder im Bergbau einsetzbaren Maschine (14, 16, 18, 20), die ihre Position verändern und/oder mit wenigstens einem Abschnitt Bewegungen ausführen kann,
wobei die wenigstens eine Sensoreinheit (10) Informationen bezüglich der wenigstens einen Maschine (14, 16, 18, 20) ermittelt,
wobei die von der wenigstens einen Sensoreinheit (10) ermittelten Informationen zumindest eine Information aus der folgenden Gruppe umfassen: Positionsinformationen der Maschine, wenigstens einen Geschwindigkeitswert in wenigstens einer Richtung, wenigstens einen Beschleunigungswert in wenigstens einer Richtung,
wobei die wenigstens eine Auswerteeinheit (12, 48) anhand der von der wenigstens einen Sensoreinheit (10) ermittelten Informationen wenigstens eine Aktivität der wenigstens einen Maschine (14, 16, 18, 20) ermittelt, wobei die wenigstens eine Auswerteeinheit (12, 48) in den von der wenigstens einen Sensoreinheit (10) ermittelten Informationen Informationsmuster ermittelt, wobei die wenigstens eine Auswerteeinheit (12) anhand der ermittelten Informationsmuster eine Aktivität wenigstens einer Maschine (14, 16, 18, 20) ermittelt.

## Claims

1. A system (100) for determining the activities of at least one machine (14, 16, 18, 20) which can be used on construction sites and/or in mining and which can change its position and/or make movements with at least one portion, the activities comprising construction site activities or mining activities, the system (100) comprising at least one sensor unit (10) which can be arranged on the at least one machine, and at least one evaluation unit (12, 48),
wherein the at least one sensor unit (10) is configured to determine information concerning the at least one machine (14, 16, 18, 20),
wherein the information determined by the at least one sensor unit (10) comprises at least one item of information from the following group: position information of the machine, at least one speed value in at least one direction, at least one acceleration value in at least one direction,
wherein the at least one evaluation unit (12, 48) is configured to determine at least one activity of the at least one machine (14, 16, 18, 20) on the basis of the information determined by the at least one sensor unit (10),
wherein the at least one evaluation unit (12, 48) is configured to determine information patterns in the information determined by the at least one sensor unit (10), wherein the at least one evaluation unit (12) is configured to determine an activity of at least one machine (14, 16, 18, 20) on the basis of the determined information patterns.

2. The system (100) of claim 1,
wherein the information determinable by the at least one sensor unit (10) comprises at least surroundings information on the surroundings of the machine (14, 16, 18, 20), and/or
wherein the information determinable by the at least one sensor unit (10) comprises the orientation of the machine (14, 16, 18, 20) or the orientation of at least a part of the machine (14, 16, 18, 20).

3. The system (100) of claim 1 or 2,
wherein the at least one evaluation unit (12, 48) and/or the at least one sensor unit (10) are configured to merge the information determined by the at least one sensor unit (10).

4. The system (100) of any one of claims 1 to 3,
wherein the at least one evaluation unit (12, 48) includes at least one artificial intelligence unit.

5. The system (100) of any one of claims 1 to 4,
wherein the system (100) is configured to determine an activity of the machine (14, 16, 18, 20) independently of internal machine parameters.

6. The system (100) of any one of claims 1 to 5,
wherein the system (100) has a plurality of sensor units (10), wherein each of the sensor units (10) can be arranged on a machine (14, 16, 18, 20), wherein the at least one evaluation unit is optionally configured to determine an activity of a machine or cooperative activities of two or more machines (14, 16, 18, 20) on the basis of the information determined by the plurality of sensor units.

7. The system (100) of any one of claims 1 to 6,
wherein the at least one sensor unit (10) is configured to send the determined information to the evaluation unit (12, 48) or to make it available for retrieval by the at least one evaluation unit (12, 48).

8. The system (100) of claim 7,
wherein the at least one sensor unit (10) is configured to temporarily store the determined information if no connection to the at least one evaluation unit (12, 48) can be established, wherein the at least one sensor unit (10) is configured to send the stored information to the at least one evaluation unit (12, 48) or to make it available for retrieval if a connection to the at least one evaluation unit (12, 48) can be established.

9. The system (100) of any one of claims 1 to 8,
wherein the at least one evaluation unit (48) is integrated into the at least one sensor unit (10), or
wherein the at least one evaluation unit (12) is a unit that is spatially separated from the at least one sensor unit (10).

10. The system (100) of any one of claims 1 to 9,
wherein the system (100) comprises at least one first evaluation unit (12) and at least one second evaluation unit (48), wherein optionally the at least one first evaluation unit (12) is a unit that is spatially separated from the at least one sensor unit (10) and the at least one second evaluation unit (48) is integrated into the at least one sensor unit (10).

11. A method for determining the activities of at least one machine (14, 16, 18, 20) which can be used on construction sites and/or in mining and which can change its position and/or make movements with at least one portion,
wherein the at least one sensor unit (10) determines information concerning the at least one machine (14, 16, 18, 20),
wherein the information determined by the at least one sensor unit (10) comprises at least one item of information from the following group: position information of the machine, at least one speed value in at least one direction, at least one acceleration value in at least one direction,
wherein the at least one evaluation unit (12, 48) determines at least one activity of the at least one machine (14, 16, 18, 20) on the basis of the information determined by the at least one sensor unit (10), wherein the at least one evaluation unit (12, 48) determines the information patterns in the information determined by the at least one sensor unit (10), wherein the at least one evaluation unit (12) determines an activity of at least one machine (14, 16, 18, 20) on the basis of the determined information patterns.

## Revendications

1. Système (100) pour déterminer les activités d'au moins une machine (14, 16, 18, 20) utilisable sur des chantiers et/ou dans l'exploitation minière, dont la position peut changer et/ou dont au moins une section peut exécuter des mouvements, dans lequel les activités comprennent des activités de chantier ou des activités minières, dans lequel ledit système (100) comprend au moins une unité de détection (10) pouvant être disposée sur ladite au moins une machine et au moins une unité d'évaluation (12, 48),
dans lequel ladite au moins une unité de détection (10) est conçue pour déterminer des informations concernant ladite au moins une machine (14, 16, 18, 20),
dans lequel les informations déterminées par ladite au moins une unité de détection (10) comprennent au moins une information du groupe suivant : des informations de position de la machine, au moins une valeur de vitesse dans au moins une direction, au moins une valeur d'accélération dans au moins une direction,
dans lequel ladite au moins une unité d'évaluation (12, 48) est conçue pour déterminer, à l'aide des informations déterminées par ladite au moins une unité de détection (10), au moins une activité de ladite au moins une machine (14, 16, 18, 20),
dans lequel ladite au moins une unité d'évaluation (12, 48) est conçue pour déterminer des schémas d'informations dans les informations déterminées par ladite au moins une unité de détection (10), dans lequel ladite au moins une unité d'évaluation (12) est conçue pour déterminer une activité d'au moins une machine (14, 16, 18, 20) à l'aide des schémas d'informations déterminés.

2. Système (100) selon la revendication 1,
dans lequel les informations pouvant être déterminées par ladite au moins une unité de détection (10) comprennent au moins des informations d'environnement sur l'environnement de la machine (14, 16, 18, 20), et/ou
dans lequel les informations pouvant être déterminées par ladite au moins une unité de détection (10) comprennent l'orientation de la machine (14, 16, 18, 20) ou l'orientation d'au moins une partie de la machine (14, 16, 18, 20).

3. Système (100) selon la revendication 1 ou 2,
dans lequel ladite au moins une unité d'évaluation (12, 48) et/ou ladite au moins une unité de détection (10) sont conçues pour regrouper les informations déterminées par ladite au moins une unité de détection (10).

4. Système (100) selon l'une des revendications 1 à 3,
dans lequel ladite au moins une unité d'évaluation (12, 48) comprend au moins une unité d'intelligence artificielle.

5. Système (100) selon l'une des revendications 1 à 4,
dans lequel le système (100) est conçu pour déterminer une activité de la machine (14, 16, 18, 20) indépendamment de paramètres internes de la machine.

6. Système (100) selon l'une des revendications 1 à 5,
dans lequel le système (100) comprend plusieurs unités de détection (10), chacune des unités de détection (10) pouvant être disposée sur une machine respective (14, 16, 18, 20), dans lequel, en option, ladite au moins une unité d'évaluation est conçue pour déterminer une activité d'une machine ou des activités coopératives de deux ou plusieurs machines (14, 16, 18, 20) à l'aide des informations déterminées par lesdites plusieurs unités de détection.

7. Système (100) selon l'une des revendications 1 à 6,
dans lequel ladite au moins une unité de détection (10) est conçue pour envoyer les informations déterminées à l'unité d'évaluation (12, 48) ou pour les mettre à disposition en vue de leur consultation par ladite au moins une unité d'évaluation (12, 48).

8. Système (100) selon la revendication 7,
dans lequel ladite au moins une unité de détection (10) est conçue pour enregistrer temporairement les informations déterminées si aucune liaison ne peut être établie avec ladite au moins une unité d'évaluation (12, 48), dans lequel ladite au moins une unité de détection (10) est conçue pour envoyer les informations enregistrées à ladite au moins une unité d'évaluation (12, 48) ou pour les mettre à sa disposition en vue de leur consultation si une liaison peut être établie avec ladite au moins une unité d'évaluation (12, 48).

9. Système (100) selon l'une des revendications 1 à 8,
dans lequel ladite au moins une unité d'évaluation (48) est intégrée dans ladite au moins une unité de détection (10), ou
dans lequel ladite au moins une unité d'évaluation (12) est une unité spatialement séparée de ladite au moins une unité de détection (10).

10. Système (100) selon l'une des revendications 1 à 9,
dans lequel le système (100) comprend au moins une première unité d'évaluation (12) et au moins une deuxième unité d'évaluation (48), dans lequel, en option, ladite au moins une première unité d'évaluation (12) est une unité spatialement séparée de ladite au moins une unité de détection (10) et ladite au moins une deuxième unité d'évaluation (48) est intégrée dans ladite au moins une unité de détection (10).

11. Procédé pour déterminer les activités d'au moins une machine (14, 16, 18, 20) utilisable sur des chantiers et/ou dans l'exploitation minière, dont la position peut changer et/ou dont au moins une section peut exécuter des mouvements,
dans lequel ladite au moins une unité de détection (10) détermine des informations concernant ladite au moins une machine (14, 16, 18, 20),
dans lequel les informations déterminées par ladite au moins une unité de détection (10) comprennent au moins une information du groupe suivant : des informations de position de la machine, au moins une valeur de vitesse dans au moins une direction, au moins une valeur d'accélération dans au moins une direction,
dans lequel ladite au moins une unité d'évaluation (12, 48) détermine, à l'aide des informations déterminées par ladite au moins une unité de détection (10), au moins une activité de ladite au moins une machine (14, 16, 18, 20), dans lequel ladite au moins une unité d'évaluation (12, 48) détermine des schémas d'informations dans les informations déterminées par ladite au moins une unité de détection (10), dans lequel ladite au moins une unité d'évaluation (12) détermine une activité d'au moins une machine (14, 16, 18, 20) à l'aide des schémas d'informations déterminés.
